Europäisches Patentamt

European Patent Office

Office européen des brevets

(11) Veröffentlichungsnummer: **0 229 132 B1**

(19)

(12) **EUROPÄISCHE PATENTSCHRIFT**

(45) Veröffentlichungstag der Patentschrift: **29.01.92**

(21) Anmeldenummer: **86904169.9**

(22) Anmeldetag: **17.07.86**

(86) Internationale Anmeldenummer:
**PCT/EP86/00419**

(87) Internationale Veröffentlichungsnummer:
**WO 87/00517 (29.01.87 87/03)**

(51) Int. Cl.⁵: **C02F  3/12**, C02F 3/30,
C02F 3/20, B01D 63/00,
B01D 69/10

(54) **GEFLUTETER BIOFILM REAKTOR MIT MEMBRANBEGASUNG FÜR WASSERBEHANDLUNG.**

(30) Priorität: **17.07.85 DE 3525493**
**14.12.85 DE 3544383**

(43) Veröffentlichungstag der Anmeldung:
**22.07.87 Patentblatt  87/30**

(45) Bekanntmachung des Hinweises auf die
Patenterteilung:
**29.01.92 Patentblatt  92/05**

(84) Benannte Vertragsstaaten:
**AT BE CH DE FR GB IT LI NL SE**

(56) Entgegenhaltungen:
**EP-A- 0 067 116      DE-A- 1 459 450**
**DE-A- 2 026 079      DE-A- 3 129 064**
**GB-A- 2 025 256      GB-A- 2 075 547**

**See also references of WO8700517**

(73) Patentinhaber: **BRÄUTIGAM, Hans-Jürgen**
**Marmstorferweg 7**
**W-2100 Hamburg 90(DE)**

Patentinhaber: **SEKOULOV, Ivan**
**Müllenhoffweg 22**
**W-2000 Hamburg 52(DE)**

(72) Erfinder: **BRÄUTIGAM, Hans-Jürgen**
**Marmstorferweg 7**
**W-2100 Hamburg 90(DE)**
Erfinder: **SEKOULOV, Ivan**
**Müllenhoffweg 22**
**W-2000 Hamburg 52(DE)**

(74) Vertreter: **Schmidt-Bogatzky, Jürgen, Dr. Ing.**
**Huth, Dietrich & Partner et al**
**Warburgstrasse 50**
**W-2000 Hamburg 36(DE)**

## Beschreibung

Die Erfindung betrifft ein Verfahren zur biologischen und physikalischen Elimination unerwünschter Wasserinhaltsstoffe aus Wasser mittels gefluteter Biofilmreaktoren, bei dem das Reaktorträgermaterial über die Reaktorbetthöhe mit einem Gas beaufschlagt wird, und eine Anlage zur Durchführung des Verfahrens.

Das Verfahren und die anlage dient insbesondere zu reinigenden Behandlung von Wässern, die mit unerwünschten anorganischen Inhaltstoffen wie Ammonium, Nitrat- und Nitrit-Stickstoff bzw. gesundheitsschädlichen flüchtigen wie z. B. halogenierte Kohlenwasserstoffe, Ammoniak u. dgl. enthaltenden Substanzen belastet sind. Es ist bekannt, daß vor allem bei langsam wachsenden Mikroorganismen wie z. B. Nitrifikanten Biofilmreaktoren gegenüber total durchmischten Reaktoren Vorteile haben. Beispielsweise bleiben einmal auf dem Trägermaterial aufgewachsene Mikroorganismen im System und werden zusätzlich noch angereichert. Ein Nachteil von Biofilmreaktoren ist die erschwerte Versorgung der Biofilm-Mikroorganismen mit Sauerstoff oder anderen Gasen, wie Wasserstoff sowie die Entsorgung der zugehörigen Stoffwechselendprodukte Kohlendioxid bzw. Stickstoff bei der Denitrifikation. Ferner bilden sich in Biofilmreaktoren leistungsverringernde Stoffkonzentrationsprofile vom Reaktorzufluß zum Reaktorablauf hin aus. Die Vergrößerung der inneren Oberfläche eines Biofilmreaktors durch Verwendung eines Trägermaterials mit großer spezifischer Oberfläche wie z. B. $O_S$ ≥ 250 m²/m³ kann die Biomasse und somit den Stoffumsatz wesentlich steigern. Bei Festbettreaktoren kann allerdings die hydraulische Durchströmung durch Verstopfung beeinträchtigt werden. Dieses Problem entfällt beim Einsatz von Fließbettreaktoren. Es wird deshalb bereits seit langer Zeit versucht, diese zur Reinigung von Wässern einzusetzen. Allerdings erwies sich die Realisierung einer 15 bis 20 %igen Bettexpansion im technischen Maßstab als problematisch, da das Fließbett durch die direkte Begasung des Reaktors zur Sauerstoffversorgung des Biobewuchses außer Kontrolle geriet. Das Einblasen von Luft am Boden des Fließbettreaktors zur Deckung des Sauerstoffbedarfes hat sich ebenfalls als Nachteil erwiesen, da die aufsteigenden Gasblasen kontinuierlich Trägermaterial austragen und den Dauerbetrieb erschweren. Aus diesem Grunde hat sich die externe Sauerstoffanreicherung durchgesetzt. Die Sauerstoffkonzentration des Zulaufwassers wird vor Eintritt in das Fließbett mit reinem Sauerstoff bei Überdruck in einem Oxygenator auf Werte um 50 gO₂/m³ erhöht. Als charakteristisches Merkmal dieses Verfahrens stellt sich jedoch ein ausgeprägter Sauerstoffkonzentrationsabfall über die Höhe des Fließbettes ein. Mögliche Störungen des biologischen Umsetzungsprozesses können daher nur durch hohe Rezirkulationsraten verhindert werden, was ebenfalls als nachteilig empfunden wird.

Nach der EP-A 00 67 116 ist es ferner bekannt, mit Stützgeweben verstärkte Membranen aus Silikonkautschuk in einen Behälter mit Flüssigkeit einzusetzen, um diese be- und entgasen zu können. Die Membran kann als Festbett ausgebildet werden, auf dem Bakterien aufwachsen können. Diese decken ihren Sauerstoffbedarf durch den durch die Membran diffundierenden Sauerstoff. Eine solche Anordnung einer Membran kann zur Abwasserbehandlung eingesetzt werden. In der GB-A-2 075 547 ist ebenfalls die Ausbildung einer Membran beschrieben, die in einen Abwasserbehälter eingesetzt werden kann und hier zur Unterstützung mikrobiologischer Prozesse zur Wasseraufbereitung dient.

Die Aufgabe der Erfindung besteht darin, ein Verfahren der eingangs genannten Art und eine Anlage zur Durchführung des Verfahrens aufzuzeigen, bei dem die dem zu behandelnden Wasser zuzusetzenden Gase im Biofilmreaktor so zugeführt werden, daß bei optimaler Elimination unerwünschter Wasserinhaltsstoffe keine Verstopfung des Reaktors oder Beeinträchtigung des Biobewuchses entritt.

Erfindungsgemäß erfolgt die Lösung der Aufgabe bezüglich des Verfahrens durch die kennzeichnenden Merkmale des Anspruchs 1 und bezüglich der Anlage durch die kennzeichnenden Merkmale des Anspruchs 5. Vorteilhafte Ausgestaltungen der Erfindung werden in den abhängigen Ansprüchen beschrieben.

Nach der Erfindung werden das vom Biofilm auf dem Reaktorträgermaterial benötigte Gas wie z. b. Sauerstoff, Wasserstoff, Kohlenstoffdioxid oder Methan bzw. freigesetzte Stoffwechselprodukte wie z. B. $CO_2$ oder $N_2$ über einen vom Reaktorträgermaterial umgebenen Stoffaustauscher aus einem nicht porösen Kunststoff zugeführt bzw. abgeführt wird, der gewebeverstärkt sein kann. Durch diesen Stoffaustauscher erfolgt die blasenfreie Zuführung des Gases in den Biofilmreaktor, so daß z. B. die Sauerstoffversorgung des gesamten mikrobioiellen Bewuchses auf dem Reaktorträgermaterial ermöglicht wird. Bei Bedarf können die Gase im Rezirkulationswasserstrom durch einen weiteren Gasaustauscher aus nicht porösem Kunststoff angereichert werden. Unerwünschte Flotationserscheinungen durch die Stoffwechselendprodukte Kohlendioxid bzw. bei der Denitrifikation Stickstoff werden durch deren gleichzeitige Entsorgung durch die Stoffaustauscher verhindert, in dem ein Teilgasstrom abgezogen oder eine geeignete Absorbereinheit in den Gaskreislauf eingeschaltet wird. Andere flüchtige Substanzen wie z. B. niedermolekulare, halognierte Kohlenwasserstoffverbindungen oder andere organische Verbindungen werden durch die Verwendung von Aktivkohle im Absorber kontinuierlich aus der Gasphase und somit auch aus der Wasserphase entfernt. Der ober die Stoffaustauscher dienen daher gleichzeitig der Gasversorgung und Gasentsorgung. Die besondere über die Reaktorbetthöhe gleichmäßige Zufuhr von Gas ermöglicht es, bei Fließbettreaktoren bei denen aufgrund der geringen Korngröße des Trägermaterials und des Schwebezustands eine sehr große biologisch aktive Oberfläche zur Verfügung steht, den bezogen auf die Fließbettvolumeneinheit hohen Sauerstoffbedarf zu befriedigen.

In den Zeichnungen ist eine Anlage dargestellt, mittels derer das erfindungsgemäße Verfahren durchgeführt werden kann. Es zeigt:

Fig. 1
eine Anlage mit einem Fließbettreaktor in einer schematischen Darstellung

Fig. 2a und 2b
einen Stoffaustauscher für den Fließbettreaktor in einer schematischen Seitenansicht und Draufsicht

Fig. 3 und 4
die Abhängigkeit von Sauerstoffeintrag zur Fließgeschwindigkeit in einem Festbettreaktor und einem Fließbettreaktor in einer schematischen grafischen Darstellung,

Fig. 5a bis 5f
verschiedene Ausführungsformen von für den Stoffaustauscher bestimmten Kunststoffmembranen,

Fig. 6a bis 6b
die Anordnung von Schlauchmembranen für den Stoffaustauscher in einer schematischen Draufsicht,

Fig. 7a
eine weitere Ausbildung eines Stoffaustauschers in der schematischen Seitenansicht,

Fig. 7b
eine Doppelmembran in einer vergrößerten Detailansicht.

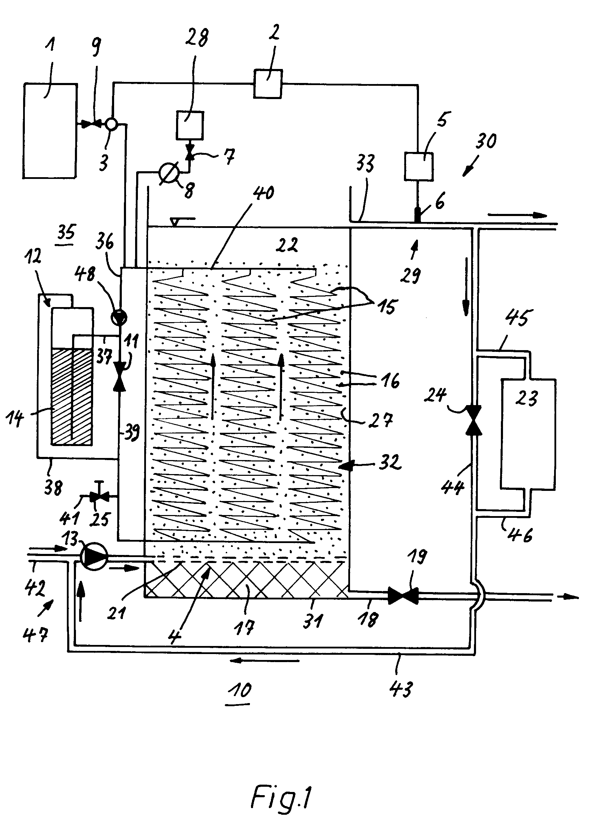

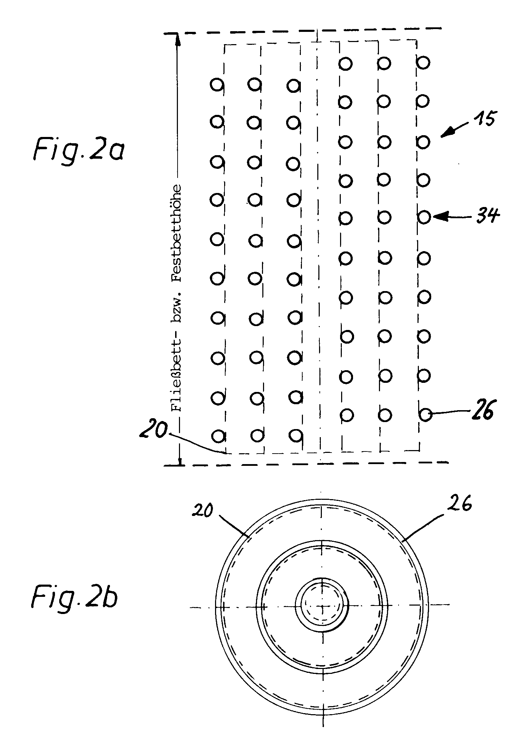

Die Anlage 10 zur biologischen und/oder physikalischen Elimination unerwünschter Wasserinhaltsstoffe aus Wasser besteht aus einem als Fließbettreaktor ausgebildeten Biofilmreaktor 22, einer Gasversorgungseinrichtung 35 und einer Wasserversorgungseinrichtung 47. Der Biofilmreaktor 22 weist ein Gehäuse auf, an dem ein Bodenablauf 18 sowie bodenseitig ein Verteilungsnetz 4 für zuzuführendes Wasser ausgebildet ist. Das Verteilungsnetz 4 kann z. B. aus perforierten Rohren 21 bestehen. Zwischen dem Verteilungsnetz 4 und dem Ablauf 18 ist eine Bodendränage 17 angeordnet. Oberhalb der Bodendränage 17 befindet sich das Fließbett 32, das aus einem Reaktorträgermaterial 27 besteht, das z. B. feinkörniger fester Bimstein, Sand od. dgl. sein kann. Der Korndurchmesser des Reaktorträgermaterials 27 kann z. B. 0,4 mm betragen. In dem Fließbett 32 ist ein Stoffaustauscher 15 angeordnet, der aus einem Stützrahmen 20 besteht, an dem ein in etwa schraubenförmig geformter dünnwandiger Schlauch 26 aus einem nicht porösen Kunststoff angeordnet ist. Die Schlauchwicklungen 34 sind im Abstand voneinander ausgerichtet, um einen möglichst großen Gasaustausch zum Reaktorträgermaterial 27 zu erzielen (Fig. 2a und 2b).

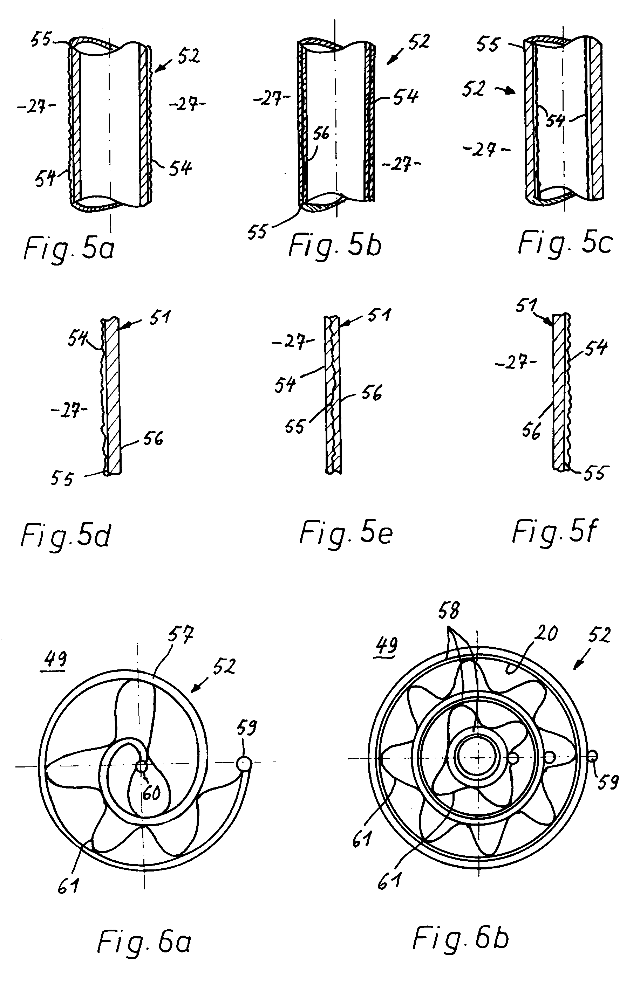

Der Stoffaustauscher 15 kann auch als Membranmodul 49, 50 und somit als austauschbares Bauelement ausgebildet sein, der porenfreie Kunststoffmembranen 51, 52, 53 aufweist. Diese können mit einem Gewebe 54 verstärkt sein. In Fig. 5a bis 5c sind als Schlauchmembranen ausgebildete Kunststoffmembranen 52 dargestellt, die z. B. aus einem ansich bekannten Siliconkunststoff wie z. B. Siliconkautschuk oder mit Silicon bzw. Siliconkautschuk beschichtetem Kunststoff bestehen können. Das Gewebe 54 kann in die Kunststoffmembran 52 eingebettet, auf der dem Reaktorträgermaterial 27 zugewandten Fläche 55 oder aber auf der dem Reaktorträgermaterial 27 abgewandten Fläche 56 angeordnet sein. Das Gewebe 54 kann aus monofilen oder multifilen organischen oder anorganischen Fasern bestehen. Organische Fasern können solche aus Polyester, Polyamid, Teflon od. dgl. sein, während als anorganische Fasern Glasfasern oder Metallfasern verwendet werden können. Von besonderem Vorteil sind Fasern, wie z. B. aus Polyester, die die zur Sterilisation erforderlichen Temperaturen ohne negative Beeinträchtigung ihrer mechanischen Eigenschaften ertragen können. In den Fig. 5d bis 5f sind schematisch ebenfalls porenfreie Kunststoffmembranen 51 dargestellt, die jeweils als Flachmembranen ausgebildet sind. Diese Kunststoffmembranen 51 weisen ebenfalls Verstärkungen mit einem Gewebe 54 auf, das wie oben beschrieben ausgebildet und angeordnet ist.

Fig. 6a und 6b zeigt die Anordnung von als Schlauchmembranen ausgebildeten porenfreien Kunststoffmembranen 52 eines Membranmoduls 49 in der Draufsicht. Die Schlauchmembranen können in einer horizontalen Ebene jeweils spiralförmig als Spiralring 57 ausgebildet sein (Fig. 6a), wobei in dem Spiralring 57 im Abstandhalter 61 am Wellband, Gewebe oder dergleichen angeordnet ist. An den Endabschnitten sind Verbindungsleitungen 59, 60 vorgesehen, die in dem Stützrahmen 20 gelagert sein können und mit der Gasvorlaufleitung 36 und mit der Gasrückflußleitung 40 verbunden sind. Ein Membranmodul 49 mit jeweils in einer horizontalen Ebene konzentrisch zueinander angeordneten als Kreisring 58 ausgebildeten Schlauchmembranen ist in Fig. 6b dargestellt. Jeder Kreisring 58 ist mittels einer Verbindungsleitung 59 mit der Gasvorlaufleitung 36 und der Gasrückflußleitung 40 verbunden. Es ist möglich, zwischen jeweils zwei Kreisringen 58 als Abstandhalter 61 ein Wellband, Gewebe od. dgl. anzuordnen.

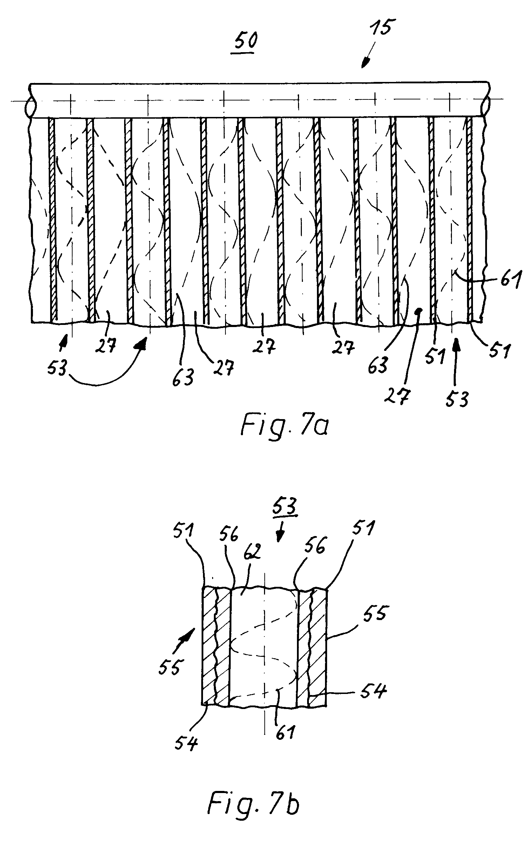

In Fig. 7a ist ein als Stoffaustauscher 15 ausgebildetes Membranmodul 50 dargestellt, dessen Kunststoffmembranen 53 vertikal angeordnet sind. Statt der Kunststoffmembranen 53 können auch Kunststoffmembranen 52 verwendet werden. Die Kunststoffmembranen 53 sind als Doppelmembranen ausgebildet und bestehen aus jeweils zwei Kunststoffmembranen 51, die mittels eines Abstandhalters 61 auf Distanz gehalten werden (Fig. 7b). Dieser kann ein Wellband sein. Durch den Kanal 62 der Doppelmembran wird das Gas eingebracht und kann durch die Kunststoffmembranen 51 nach außen in die Wasserphase und von dort auf das Reaktorträgermaterial 27 diffundieren. Die Kunststoffmembranen 53, die voneinander durch Abstandshalter 63 distanziert sein können, sind endabschnittseitig über Anschlußleitungen mit der Gasvorlaufleitung 36 und der Gasrückflußleitung 40 verbunden.

Die durch die Gewebeverstärkung erzielte Verbesserung der mechanischen Stabilität der Kunststoffmembranen 51, 52, 53 führt zusätzlich zu einer vollkommen problemlosen Handhabung der jeweiligen Membran. Die Gefahr einer mechanischen Beschädigung, die bei unverstärkten dünnwandigen Membranen auch in Schlauchform stets gegeben ist, ist bei den gewebeverstärkten Kunststoffmembranen 51, 52, 53 weitgehend beseitigt. Der Gaseintrag über nicht poröse Kunststoffmembranen 51, 52, 53 mit einer Gewebeverstärkung ist prinzipiell für alle in der Biotechnologie eingesetzten Reaktortypen geeignet und in jeweils auf den Anwendungsfall zugeschnittener Modulform wie Schlauchmodul, Flachmembranmodul, Wickelmodul mit Schläuchen bzw. Flachmembranen besonders für die Durchführung von biotechnologischen Umsetzungen im Flüssig-Fest-Wirbelschichtreaktor vorteilhaft. Bei diesem befinden sich die Mikroorganismen entweder als biologischer Belag auf einem feinkörnigen festen Träger wie z. B. Sand mit einem Durchmesser von z. B. 0,5 mm oder ohne zusätzlichen Träger nur aus Bakterienmasse bestehend Pelletform in einem permanenten Schwebezustand, der durch den aufwärtsgerichteten Strom der Nährlösung erzeugt wird. Erfaßt das jeweilige Kunststoffmembranmodul gleichmäßig die gesamte Wirbelschicht, wird eine Schaumbildung verhindert und zusätzlich noch eine schonende und über die gesamte Wirbelschicht gleichmäßige den Umsatz der Mikroorganismen steigernde Gasversorgung ermöglicht.

Der Stoffaustauscher 15 ist über Anschlußleitungen mit einer Gasversorgungseinrichtung 35 verbunden. Diese besteht aus einem Gasvorratsbehälter 1, der mittels eines Absperrventils 9 abgesperrt werden kann. Ferner ist ein Druckhalteventil 3 vorgesehen, das mit einem Regler 2 in Verbindung steht, der mit einer Meßeinrichtung 30 verbunden ist. Die Meßeinrichtung 30 besteht aus einem Meßwertaufnehmer 5 und einem Sensor 6, der im Ablauf 33 des Biofilmreaktors 22 angeordnet ist. An die Gasversorgungsleitung ist ferner ein Überdruckregler 8 sowie über ein Ventil 7 ein Überdruckgasbehälter 28 angeschlossen. In der Gasvorlaufleitung 36 befindet sich ein Verdichter 48. Mittels Anschlußleitungen 37, 38 ist ein mit einem Absorbtions- bzw. Adsorbtionsmittel 14 gefüllter Absorber 12 angeschlossen. In der Kurzschlußleitung 39 zwischen den Anschlußleitungen 37, 38 befindet sich ein Ventil 11. Ferner ist an die Gasversorgungsleitung 36 eine Abflußleitung 41 mit einem Ventil 25 angeschlossen.

Zwischen dem Ablauf 33 und dem Zulauf 42 des Biofilmreaktors 22 ist eine Rezirkulationsleitung 43 mit einem Stoffaustauscher 23 angeordnet. In dem Stoffaustauscher 23 kann dem Rezirkulationswasser ein Gas über Austauschflächen zugeführt werden, die aus einem nicht porösem Kunststoff bestehen. Zwischen den Anschlußleitungen 45, 46 des Stoffaustauschers 23 ist eine Kurzschlußleitung 44 mit einem Ventil 24 angeordnet. Die Zufuhr von Wasser in das Verteilungsnetz 4 erfolgt mittels einer Zulaufpumpe 13.

Das zu behandelnde Wasser wird mittels der Zulaufpumpe 13 über das Verteilungsnetz 4 aus z. B. perforierten Rohren 21 am Boden 24 in den Biofilmreaktor 22 eingeleitet und durchströmt diesen von unten nach oben. Der Biofilmreaktor 22 weist wie bereits dargelegt einen Bodenauslauf 18 und eine Bodendränage 17 auf. Die Bodendränage 17 dient dazu, das Reaktorträgermaterial 27 beim Entleeren des Biofilmreaktors 22 nach Öffnen des Ventils 19 in dem Biofilmreaktor 22 zurückzuhalten. Beim Kontakt mit dem Biofilm auf der Trägermaterialoberfläche 16 laufen die jeweiligen biologischen Umsetzungsprozesse ab. Je nach Durchflußgeschwindigkeit bleibt das Reaktorträgermaterial entweder unbewegt oder es wird expandiert. In Abhängigkeit von der Durchflußgeschwindigkeit kann somit der Biofilmreaktor 22 ein Festbett oder aber ein Fließbett aufweisen.

Der bei aeroben Prozessen benötigte Sauerstoff wird über den bzw. die Stoffaustauscher 15 zugeführt. Andere Gase wie z. B. Methan oder Wasserstoff und/oder Kohlenstoffdioxid zur autotrophen Denitrifikation z. B. auch bei Trinkwasser werden auf die gleiche Weise vom Stoffaustauscher 15 in den Biofilmreaktor 22 eingetragen.

Das Gas oder die Gasmischung des Gaseintragsystems wird aus dem Gasvorratsbehälter 1 über das automatische Druckhalteventil 3 mit vorgegebenen Grenzwerten sowie das Absperrventil 9 entweder kontinuierlich oder diskontinuierlich in den Stoffaustauscher 15 eingespeist. Das Ventil 7 dient als Notgasauslaß und wird von dem Überdruckregler 8 betätigt.

Liegt für eine Substanz ein Partialdruckgefälle zwischen Wasser und Gasphase vor, kann der Stoffaustauscher 15 zusätzlich als Entsorgungssystem eingesetzt werden. Hierzu wird der Gasstrom durch den Absorber 12 geleitet, der mit einem geeigneten Absorbtions- bzw. Adsorbtionsmittel wie Lauge, Aktivkohle u. dgl. gefüllt ist.

Eine weitere Möglichkeit, eine unerwünschte Gaskomponente wie z. B. Kohlendioxid, Stickstoff, Ammoniak aus der Wasserphase zu entfernen, ist ein kontrollierter Abzug eines Teilgasstromes über das regelbare Ventil 25 möglich. Der Absorber 12 kann allerdings auch umgangen werden, wozu lediglich das Ventil 11 zu öffnen ist.

Eine vorgegebene Sauerstoffkonzentration im Reaktorablauf 29 im Bereich des Sensors 6 wird durch den Regler 2 eingehalten, der aufgrund der Meßwerte des Meßwertaufnehmers 5 den Sauerstoffpartialdruck regelt.

Mit Hilfe des an die Rezirkulationsleitung 43 angeschlossenen weiteren Stoffaustauschers 23 aus nicht porösen Kunststoff kann das Rezirkulationswasser -falls erforderlich - mit dem Gas angereichert werden. Gleichzeitig können Stoffwechselprodukte und störende Wasserinhaltsstoffe ausgetragen werden. In diesem Stoffaustauscher 23 können auch Kunststoffflachmenbranen eingesetzt werden.

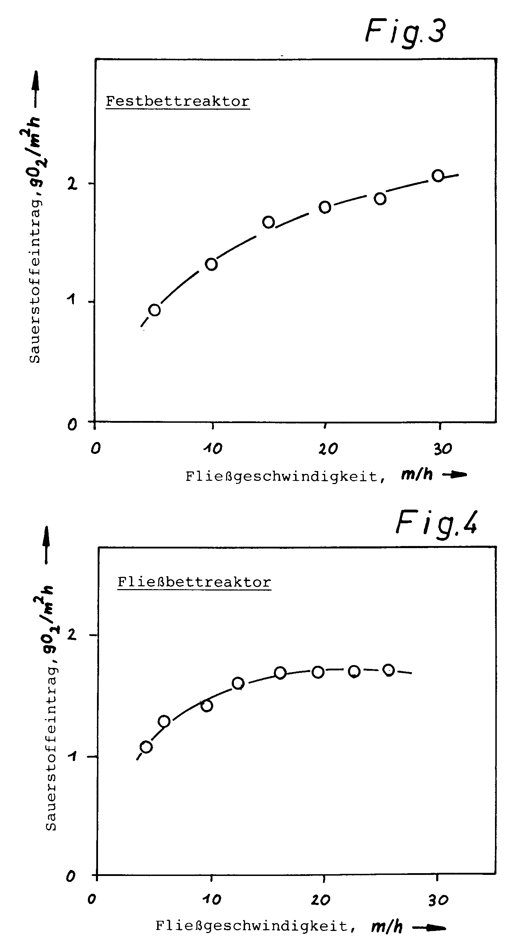

In den Fig. 3 und 4 ist die Eignung des oben beschriebenen Verfahrens am Beispiel des Sauerstoffeintrags in einen Festbettreaktor und einem Fließbettreaktor dargestellt. Als Bettmaterial für den Festbettreaktor wurde Bimsstein mit einer Körnung von 1,5 bis 3 mm eingesetzt. Beim Fließbettreaktor wurde Sand mit einer Körnung von 0,1 bis 0,3 mm verwendet. Der benutzte Stoffaustauscher wies einen Schlauch aus Siliconkautschuk auf. Der Sauerstoffeintrag dieses Stoffaustauschers erhöhte sich in beiden Reaktoren mit der Fließgeschwindigkeit der Wasserphase.

Im Falle des Festbettreaktors (Fig. 3) steigt der $O_2$-Eintrag durch Vergrößerung der Fließgeschwindigkeit ( 5m/h auf 30 m/h ) von 0,9 g $O_2$ pro Stunde und $m^2$ Austauscheroberfläche ( g $O_2/m^2h$) auf 2,0 g $O_2/m^2h$ an.

Beim Fließbettreaktor (Fig. 4) führt die zunehmende Fließgeschwindigkeit und zunehmende Fließbettexpansion ebenfalls zu einer Vergrößerung des Sauerstoffeintrags von 1,1 g $O_2/m^2h$ auf 1,7 g $O_2/m^2h$. Die Fließbettexpansion erreicht bei einer Fließgeschwindigkeit von 16 m/h die obere Grenze des Austauschers. Die Erhöhung der Fließgeschwindigkeit über diesen Wert vergrößert den Sauerstoffeintrag nur noch unwesentlich.

In beide Fällen betrug der Sauerstoffpartialdruck $PO_2 = 1$ bar. Der Sauerstoffeintrag des Austauschers erhöht sich proportional mit einem Sauerstoffpartialdruck.Wasserinhaltsstoffe aus Wasser mittels gefluteter Biofilmreaktoren und eine Anlage zur Durchführung des Verfahrens.

**Patentansprüche**

1. Verfahren zur biologischen und physikalischen Elimination unerwünschter Wasserinhaltsstoffe aus Wasser mittels gefluteter Biofilmreaktoren, bei der das Trägermaterial für den Biofilm über die Reaktorbetthöhe mit einem Gas beaufschlagt wird, dadurch gekennzeichnet, daß als Trägermaterial für den Biofilm das feinkörnige Fließbett eines Fließbettreaktors verwendet wird und daß das vom Biofilm auf den Fließbetteilchen benötigte Gas wie z. B. Sauerstoff, Wasserstoff, Kohlendioxid oder Methan bzw. freigesetzte Stoffwechselendprodukte wie z. B. $CO_2$ oder $N_2$ über einen in das Fließbett eingeführten Stoffaustauscher aus einem nicht porösen gewebeverstärkten Kunststoff zugeführt bzw. abgeführt wird.

2. Verfahren nach Anspruch 1, bei dem der Biofilmreaktor mit Rezirkulationswasser beaufschlagt wird, dadurch gekennzeichnet, daß dem Rezirkulationswasser Sauerstoff bzw. Wasserstoff und Kohlenstoffdioxid über einen Stoffaustauscher aus nicht porösem gewebeverstärktem Kunststoff zugeführt wird.

3. Verfahren nach einem der Ansprüche 1 und 2, dadurch gekennzeichnet, daß durch einen Teilabzug der Gasphase Kohlenstoffdioxid und Stickstoff aus dem Fließbettreaktor ausgetragen wird und unerwünschte flüchtige Wasserinhaltsstoffe über eine Absorbereinheit in dem Gaskreislauf aus der Wasserphase entfernt werden.

4. Verfahren nach Anspruch 3, dadurch gekennzeichnet, daß zur Verhinderung von Flotation durch die Stoffwechselendprodukte im Fließbettreaktor ein Teilgasstrom abgezogen oder der Gasstrom durch eine Absorbereinheit geleitet wird.

5. Anlage zur Durchführung des Verfahrens nach Anspruch 1 bis 4, mit einem als Fließbettreaktor (22) ausgebildeten Biofilmreaktor mit bodenseitigem Zulauf und reaktorkopfseitigem Ablauf sowie Mitteln zur Einbringung von einem Gas oder Gasgemisch in das Fließbett (32) des Fließbettreaktors, gekennzeichnet durch einen im Fließbett (32) zwischen einem Verteilnetz (4) für einströmendes Wasser und dem Ablauf (33) angeordneten als Membranmodul (49, 50) ausgebildeten porenfreie Kunststoffmembranen (51, 52, 53) aufweisenden Stoffaustauscher (15), der mit einer Gasversorgungseinrichtung (35) verbunden ist.

6. Anlage nach Anspruch 5, dadurch gekennzeichnet, daß an der Gasvorlaufleitung (36) der Gasversorgungseinrichtung (35) ein regelbarer Absorber (12) angeschlossen ist.

7. Anlage nach Anspruch 5, dadurch gekennzeichnet, daß zwischen dem Ablauf (33) und dem Zulauf (42) eine Rezirkulationsleitung (43) mit einem Stoffaustauscher (23) angeordnet ist, in dem dem Rezirkulationswasser dosiert ein Gas über aus nicht porösem Kunststoff bestehende Austauschflächen zugeführt wird.

8. Anlage nach Anspruch 5, dadurch gekennzeichnet, daß die porenfreien Kunststoffmembranen (51, 52, 53) mit einem Gewebe (54) aus monofilen oder multifilen organischen oder anorganischen Fasern verstärkt sind.

9. Anlage nach Anspruch 8, dadurch gekennzeichnet, daß das Gewebe (54) in die porenfreie Kunststoffmembran (51, 52, 53) eingebettet, auf der dem Reaktorträgermaterial (27) abgewandten Fläche (56) der porenfreien Kunststoffmembran (51, 52, 53) oder auf der dem Reaktorträgermaterial (27) zugewandten Fläche (56) der porenfreien Kunststoffmembran (51, 52, 53) angeordnet ist.

10. Anlage nach Anspruch 5, 8 und 9, dadurch gekennzeichnet, daß das Membranmodul (49) aus einer porenfreien Kunststoffmembran (52) besteht, die als dünnwandiger Schlauch (26) mit im Abstand voneinander angeordneten Schlauchwindungen (34) ausgebildet an einem Stützrahmen (20) gelagert ist.

11. Anlage nach Anspruch 5, 8 und 9, dadurch gekennzeichnet, daß das Membranmodul (49) aus dünnwandigen Schläuchen (26) besteht, die als Spiralringe (57) oder konzentrisch zueinander angeordnete Kreisringe (58) ausgebildet sind und mittels Verbindungsleitungen (59, 60) in einem Stützrahmen (20) gelagert und mit der Gasvorlaufleitung (36) und der Gasrückflußleitung (40) verbunden sind.

12. Anlage nach Anspruch 5, 8 und 9, dadurch gekennzeichnet, daß das Membranmodul (50) aus zueinander parallel vertikal angeordneten Kunststoffmembranen (51, 52, 52) besteht, die mittels Abstandshalter (60) voneinander distanziert und mit der Gasvorlaufleitung (36) und der Gasrückflußleitung (40) verbunden sind.

**Claims**

1. Method of biological and physical elimination of not wanted contents out of water by inundated bio-film-reactors, where the carrier material for the bio-film is admitted with a gas over the reactor's height, characterized in that the fine-grained fluidized bed of a fluidized bed reactor is used as support material for the bio-film and that the gas, needed from the bio-film on the fluidized bed particles, like oxygen, hydrogen, carbon dioxide or methane, respectively released metalbolic end products like carbon dioxide or $N_2$ is furnished or carried off via a material exchanger, brought in the fixed bed made of a non-porous, woven-fortified synthetic.

2. Method according to claim 1 at which the bio-film-reactor is admitted with recirculation water, characterized in that oxygen or hydrogen and carbon dioxide, respectively, are added to the recirculation water via a material exchanger made of non-porous, woven-fortified synthetic.

3. Method according to one of claims 1 and 2, characterized in that carbon dioxide and nitrogen are carried out of the fluidized bed reactor by a partial discharge of the gas phase and not wanted volatile water contents are removed out of the water phase over an absorber unit in the gas circle.

4. Method according to claim 3, characterized in that a partial gas stream is pulled off in order to prevent flotation by the metabolic end products in the fluidized bed reactor or the gas stream is led through an absorber unit.

5. Arrangement for performing the method according to claim 1 to 4 with a bio-film-reactor, formed as biological film reactor (22), with groundsided inlet and outlet at the reactor's head, as well as means for putting a gas or gas mix in biological film reactor (22) of the fluidized bed reactor, characterized by a material exchanger (15) arranged in fluidized bed (32) between distribution network (4) for incoming water and outlet (33), formed as membrane module (49, 50) possessing non-porous synthetic membrane (51, 52, 53), that is connected with gas supply device (35).

6. Arrangement according to claim 5, characterized in that, an absorber (12) is connected with gas supply line (36) of gas supply device (35).

7. Arrangement according to claim 5, characterized in that, a recirculation line (43) with material exchanger (23) is arranged between outlet (33) and inlet (42), in which a gas is dosedly added to the recirculations water via exchanging areas consisting of non-porous synthetic.

8. Arrangement according to claim 5, characterized in that, the non-porous synthetic membranes (51, 52, 53) are fortified with woven fabrics (54) made of monofil or multifil organic or anorganic fibres.

9. Arrangement according to claim 8, characterized in that woven fabrics (54) embed in non porous synthetic membrane (51, 52, 53) is arranged at area (56) being turned off to reactor support material (27) of synthetic membrane (51, 52, 53) or at area (55) of non porous synthetic membrane (51, 52, 53) being turned towards support material (27).

10. Arrangement according to claim 5, 8 and 9, characterized in that a membrane module (49) consists of a non-porous synthetic membrane (52) that is formed as thin-walled tube (26) with tube- turns (34), arranged with distance and is stored on support frame (20).

11. Arrangement according to claim 5, 8 and 9, characterized in that a membrane module (49) consists of thin-walled pipes (26) that are formed as (57) or as coaxially arranged circular rings (58) and are connected with gas supply line (36) and gas backflow line (40) and are stored in support frame (20) by help of connection line (59, 60).

12. Arrangement according to claim 5, 8, 9 characterized in that membrane module (50) consists of parallelly, vertically arranged synthetic membranes (51, 52, 53) which are in distance from each other by means of spreader (60) and are connected with gas supply line (36) and gas backflow line (40).

## Revendications

1. Procédé pour l'élimination biologique et physique des constituants aqueux indésirables au moyen d'un réacteur à film biologique noyé par lequel un gaz est injecté dans le matériau support du film biologique sur la hauteur du lit du réacteur caractérisé en ce que le lit fluidisé à grains fins d'un réacteur est utilisé comme matériau support du film biologique et en ce que du film biologique aux particules du lit fluidisé un gaz tel que l'oxygène, l'hydrogène, le dioxyde de carbone ou le méthane est successivement appliqué et évacué, des produits finaux du métabolisme tels que $CO_2$ ou $N_2$ étant libérés dans un échangeur de substances introduit dans le lit fluidisé sur un matériau synthétique renforcé d'un tissu non poreux.

2. Procédé selon la revendication 1, par lequel on applique une eau de recyclage au réacteur à film biologique caractérisé en ce que l'oxygène, l'hydrogéne, le dioxyde de carbone sont amenés dans l'eau de recyclage par un échangeur de substances sur un matériau synthétique renforcé d'un tissu non poreux.

3. Procédé selon l'une quelconque des revendications 1 ou 2, caractérisé en ce que le dioxyde de carbone et l'azote sont évacués du réacteur à lit fluidisé par un écoulement partiel en phase gazeuse et en ce que les constituants aqueux volatils indésirables sont éliminés dans une unité d'absorbeur pendant le recyclage du gaz en phase aqueuse.

4. Procédé selon la revendication 3, caractérisé en ce que pour éviter la flottation dans le réacteur à lit fluidisé à travers les produits finaux du métabolisme, on fait couler un flux de gaz partiellement évacué ou le flux de gaz à travers une unité d'absorbeur.

5. Dispositif pour la mise en oeuvre du procédé selon l'une quelconque des revendications 1 à 4, comprenant un réacteur à film biologique constitué d'un réacteur à lit fluidisé (22) qui comporte une arrivée côté base du réacteur et une sortie côté tête ainsi qu'un moyen pour l'introduction d'un gaz ou d'un mélange gazeux dans le lit fluidisé (32) du réacteur caractérisé en ce qu'un échangeur de substances (15) comportant une membrane en matériau synthétique non poreux qui est constituée d'un module disposé en forme de membrane dans un lit fluidisé (32) entre un réseau de distribution (4) pour l'eau d'admission et la sortie (33) disposée en forme de module à membrane (49, 50), l échangeur de substances (15) étant relié à un dispositif d'alimentation en gaz (35).

6. Dispositif selon la revendication 5, caractérisé en ce qu'un absorbeur (12) qui peut être commandé est raccordé à une canalisation d'arrivée de gaz (36) du dispositif d'alimentation en gaz (35).

7. Dispositif selon la revendication 5, caractérisé en ce qu'une conduite de recyclage (43) est disposée avec un échangeur de substances (23) entre la sortie (33) et l'arrivée (42), dans laquelle un gaz est amené sur des surfaces d'échange formées d'un matériau synthétique non poreux.

8. Dispositif selon la revendication 5, caractérisé en ce que les membranes (51, 52, 53) en matériau synthétique non poreux sont renforcées par des fibres organiques ou minérales monofilaires ou multifilaires.

9. Dispositif selon la revendication 8, caractérisé en ce que le tissu (54) incorporé dans les membranes en matériau synthétique non poreux (51, 52, 53) est disposé sur la surface (56) des membranes en matériau synthétique non poreux (51, 52, 53) opposée au matériau support dans le réacteur ou sur la surface (56) des membranes en matériau synthétique non poreux (51, 52, 53) orientés vers le matériau support du réacteur (27).

10. Dispositif selon l'une quelconque des revendications 5, 8 ou 9, caractérisé en ce que le module à membrane (49) est constitué d'une membrane en matériau synthétique non poreux (52), laquelle est disposée sous la forme d'un tuyau à paroi mince (26) et comprend des spires (34) espacées les unes des autres et est monté sur un cadre support (20).

11. Dispositif selon l'une quelconque des revendications 5, 8 ou 9, caractérisé en ce que le module à membrane (49) est constitué de tuyaux à paroi mince (26), lesquels sont formés à partir d'anneaux en spirale (57) ou d'anneaux en couronne (58) disposés concentriquement les uns par rapport aux autres et forment un cadre support (20) au moyen de conduites de raccordement (59, 60) et sont reliés à la canalisation d'arrivée de gaz (36) ainsi qu'à la canalisation de recyclage (40).

12. Dispositif selon l'une quelconque des revendications 5, 8 ou 9, caractérisé en ce que le module à membrane (49) est constitué de membranes en matériau synthétique (51, 52, 53) disposées verticalement et parallèlement les unes aux autres, celles-ci étant espacées les unes des autres au moyen d'un colonette (60) et étant reliées à la canalisation d'arrivée de gaz (36) ainsi qu'à la conduite de recyclage de gaz (40).

Fig.1

Fig.2a

Fließbett- bzw. Festbetthöhe

15

34

26

20

Fig.2b

20

26

*Fig.3*

*Fig.4*

Fig. 5a

Fig. 5b

Fig. 5c

Fig. 5d

Fig. 5e

Fig. 5f

Fig. 6a

Fig. 6b

Fig. 7a

Fig. 7b